# EUROPEAN PATENT APPLICATION

(11) **EP 1 437 871 A1**
(43) Date of publication of application: **14.07.2004**
(21) Application number: 03029100.9
(22) Date of filing: 18.12.2003
(51) Int. Cl.: H04L 27/26

(54) **System and method for reducing disruption in a DSL environment caused by a POTS transient event**

(30) Priority: 20.12.2002 US 326325
(71) Applicant: ALCATEL, 75008 Paris (FR)
(72) Inventor: Bentley, Ronald, Santa Rosa, California 95405 (US); Ploumen, Franciscus Maria, Petaluma, CA 94954 (US)
(74) Representative: Dreiss, Fuhlendorf, Steimle & Becker

(57) **Abstract**

A system and method for reducing disruption in a DSL environment caused by a POTS transient event such as ringing or ring trip. When a transient event is about to take place over a subscriber loop, a bit reassignment module is invoked by appropriate DSL control logic in order to allocate DSL data bits from one or more susceptible carrier channels of the DSL transmission spectrum to one or more less susceptible carrier channels thereof. Upon completion of the transient event, loading of the DSL data bits in the carrier channels of the transmission spectrum may revert to a default profile.

## Description

### BACKGROUND OF THE INVENTION

### Technical Field of the Invention

The present invention generally relates to telecommunications. More particularly, and not by way of any limitation, the present invention is directed to a system and method for reducing disruption in a DSL environment caused by a POTS transient event.

### Description of Related Art

It is well known that transient behavior of POTS circuitry during probabilistic events such as ringing and ring trip leads to data corruption in a Digital Subscriber Line (DSL) environment. Deployment of next generation DSL equipment requiring the use of less filtering in the POTS circuitry in order to meet line card density requirements will undoubtedly tend to aggravate this DSL data corruption problem. Furthermore, whereas the applications run on currently deployed DSL lines use TCP-IP and are largely insensitive to data errors or delay, emerging services such as Voice-over-DSL (VoDSL), real-time high resolution video, multimedia applications, et cetera, cannot afford either delay or high rate of error correction.

Current solutions that address this problem have several drawbacks and deficiencies, however. For instance, one existing solution involves forcing a,'reduced data capacity on the DSL carrier channels by increasing the noise margin. Another solution involves adding more complex hardware filters, thereby adding to the cost structure and adversely impacting form factor requirements.

### SUMMARY OF THE INVENTION

Accordingly, the present disclosure advantageously provides a system and method for reducing disruption (i.e., data corruption) in a DSL environment caused by a POTS transient event such as ringing or ring trip. When a transient event is about to take place over a subscriber loop, a bit reassignment module is invoked by appropriate DSL control logic in order to allocate DSL data bits from one or more susceptible carrier channels of the DSL transmission spectrum to one or more less susceptible carrier channels thereof. Upon completion of the transient event, loading of the DSL data bits in the carrier channels of the transmission spectrum may revert to a default profile.

### BRIEF DESCRIPTION OF THE DRAWINGS

The accompanying drawings are incorporated into and form a part of the specification to illustrate one or more presently preferred exemplary embodiments of the present invention. Various advantages and features of the invention will be understood from the following Detailed Description taken in connection with the appended claims and with reference to the attached drawing figures in which:
FIG. 1A depicts an exemplary embodiment of a DSL subscriber loop environment wherein the teachings of the present invention may be practiced; ,
FIG. 1B depicts an exemplary graph that illustrates bandwidth separation in a DSL subscriber loop environment;
FIG. 2A depicts a functional block diagram of an exemplary DSL system at a Transmit station;
FIG. 2B depicts a functional block diagram of an exemplary DSL system at a Receive station;
FIG. 3 depicts an exemplary communication system wherein DSL data bits are reallocated in accordance with the teachings of the present invention to reduce disruption caused by a POTS transient event;
FIG. 4 depicts a functional block diagram of an exemplary DSL control module of the present invention;
FIG. 5 is a flow chart of the present invention's methodology; and
FIG. 6 is another flow chart of the present invention's methodology.

### DETAILED DESCRIPTION OF THE DRAWINGS

Presently preferred exemplary embodiments of the invention will now be described with reference to various illustrations of how the invention can best be made and used. Like reference numerals are used throughout the description and several views of the drawings to indicate like or corresponding parts, wherein the various elements are not necessarily drawn to scale.

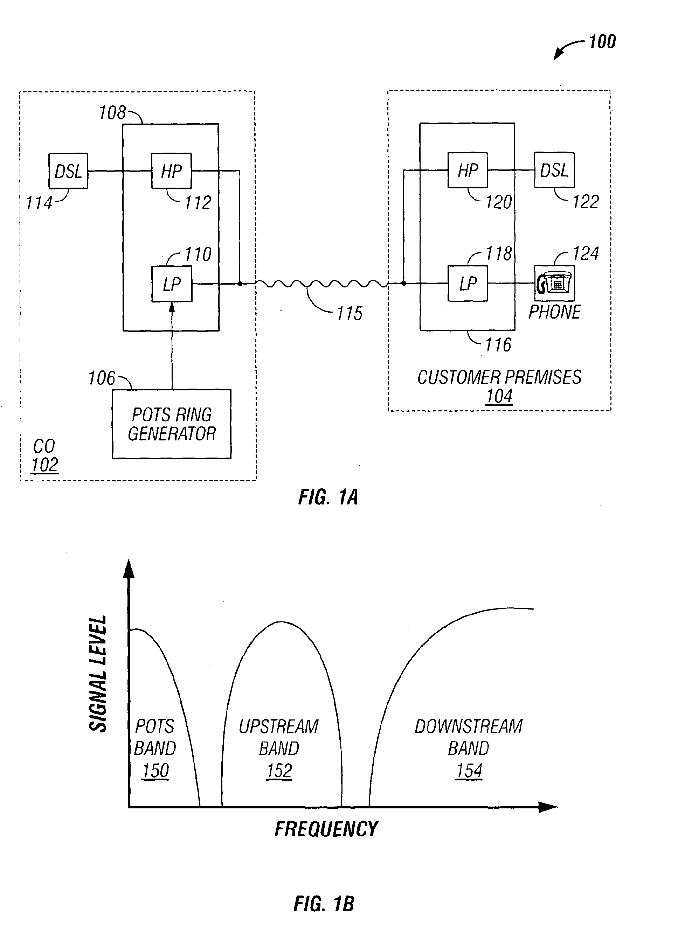

Referring now to the drawings, and more particularly to FIG. 1, there is shown an exemplary embodiment of a DSL subscriber loop environment 100 wherein the teachings of the present invention may be practiced for reducing disruption caused by a POTS transient event such as, e.g., ringing or ring trip. The DSL environment 100 may be implemented using any known or heretofore unknown DSL technologies and standards so long as the DSL signal transmission and POTS signal transmission take place over a subscriber loop=s shared medium 115 disposed between a central office (CO) facility 102 and customer premises equipment (CPE) 104. In one embodiment, for instance, the shared medium 115 may be comprised of copper wiring, wherein DSL is implemented using such technologies as Asymmetric DSL (ADSL), Symmetric DSL (SDSL), Rate Adaptive DSL (RADSL), High Bit Rate DSL (HDSL), or Very High Bit Rate DSL (VDSL). Further, line coding schemes used for modulation of the frequency bandwidth that is allotted to DSL transmission may include, but not limited to, any of the following: (i) Carrierless Amplitude and Phase (CAP) modulation, (ii) Discrete Multi-Tone (DMT), (iii) Discrete Wavelet Multi-Tone (DWMT), and (iv) Simple Line Code (SLC) scheme.

To facilitate DSL and POTS services over the same medium, appropriate filtering mechanisms may be provided at the CO and CPE ends for separating the respective bandwidths. A filter block 108 including a low-pass (LP) filter 110 or its equivalent and a high-pass (HP) filter 112 or its equivalent are disposed at the CO facility 102. A POTS ring generator 106 is coupled to the LP block 110 for effectuating ringing in connection with voice calls over a voice network, e.g., the Public Switched Telephony Network (PSTN) (not shown in this FIG.). A consolidated DSL control block 114 coupled to the HP filter 112 is operable to provide DSL control logic as well as connectivity to a data network with respect to the CO facility 102.

Analogously, the CPE environment 104 includes a filter block 116 for separating the higher frequency DSL signal transmission from the lower frequency bandwidth of POTS. Reference numeral 124 refers to exemplary POTS equipment, e.g., a phone, coupled to a low-pass filter 118. A consolidated DSL block 112 coupled to a high-pass filter 120 is operable to provide DSL control logic as well as interfacing to suitable DSL equipment at the customer premises 104.

As will be described in greater detail hereinbelow, the DSL control blocks of the subscriber loop environment 100 are operable in concert to implement the present invention's scheme for reducing disruption on DSL channels when POTS transient events take place over the subscriber loop medium 115. Although the teachings of the present disclosure will be particularly exemplified with reference to a DSL system having the DMT line coding scheme, it should be recognized that the innovative teachings contained herein can also be applied to DSL embodiments having other types of line coding.

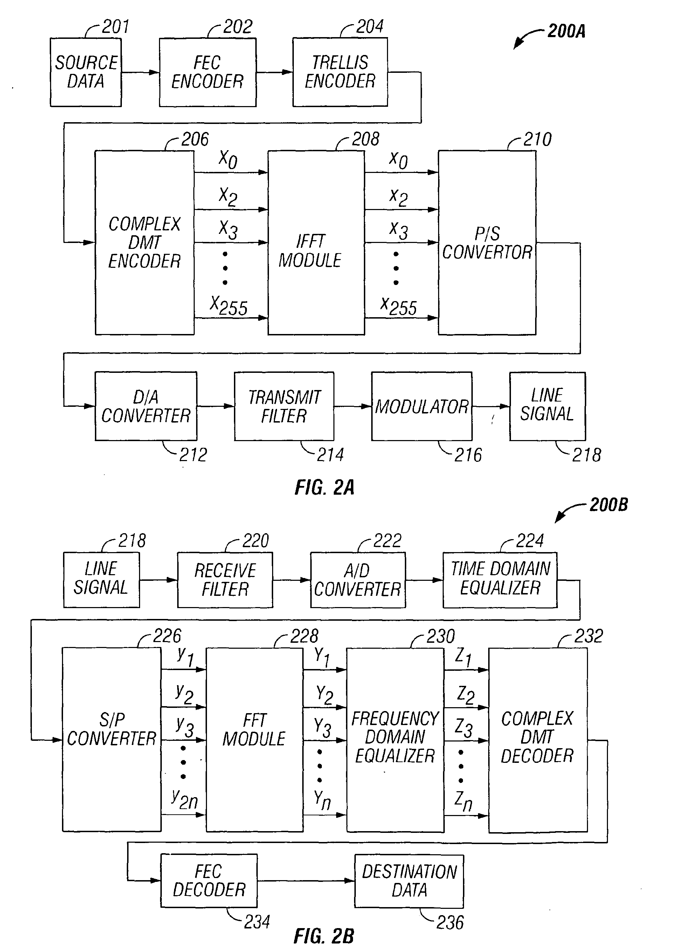

FIG. 1B depicts an exemplary graph that illustrates bandwidth separation in a typical DSL environment such as the environment 100 described above. Signal level is shown on Y-axis and the frequency range is shown on X-axis, with no particular scale on either axes. Of the available bandwidth associated with a shared subscriber loop medium, a lower frequency band 150 is allocated for transmitting POTS signals. The frequency spectrum allocated to DSL transmission may be separated asymmetrically, with a lower bandwidth portion 152 for transmitting upstream signals (i.e., towards the CO facility) and a higher bandwidth portion 154 for transmitting downstream signals (i.e., towards the subscriber). By way of example, a DMT line coding scheme may use the spectrum below 4 KHz for POTS. DSL-based data transmission may utilize the frequency spectrum between 26 KHz and 1.1 MHz, which is divided into a plurality of carrier channels (or, tones), e.g., 256 channels each having a 4 KHz bandwidth. FIGS. 2A and 2B depict functional block diagrams of an exemplary DMT-modulated DSL system at Transmit and Receive stations. Reference numeral 200A refers to a Transmit station's DMT modulation system, which could be disposed at a CO facility as a DSL Line Termination (LT) unit. Source data signals 201 to be transmitted are first encoded using a suitable encoding scheme that may involve several stages. To allow errors to be detected and corrected at the Receive station, the source bits are encoded through the use of a forward error coding (FEC) encoder 202 and optionally through the use of a Trellis encoder 204. As a result of the coding process, additional bits may be added to the source data bitstream that are used by the Receiver's modem to detect errors in the source data.

The encoded bits are then forwarded to a DMT encoder 206 which parses the incoming bitstream into groups of bits, bi (where 0≤i≤N; N can be 255 in an exemplary implementation), that are loaded on a per-channel basis. That is, a specific number of bits will be allocated for transmission on each of the 256 tones or carrier channels used in the exemplary DMT modulation scheme. The output of the DMT encoder 206 comprises a constellation of complex number variables (Xᵢ) having a real part and an imaginary part, with each variable identifying a particular constellation point in the frequency domain that represents the data symbol to be transmitted. It should be realized that any type of bit loading schemes may be used for purposes of DMT encoding.

The complex variables Xᵢ generated by DMT encoder 206 are then received by an inverse Fast Fourier Transform (IFFT) module 208 that converts Xᵢ values to real number values xᵢ in the time domain. A Parallel-to-Serial (P/S) converter 210 operates on the time domain values to produce a serial sequence of digital values, which are then converted into a time-variant analog signal by a Digital-to-Analog (D/A) converter 212. This analog signal is then filtered by a transmit filter 214 to generate a filtered analog signal that is used for modulating a carrier signal by a modulator 216. Finally, the modulated carrier signal is generated by the modulator 216 as a line signal 218 that is transmitted onto the communication medium (e.g., twisted pair of copper wires).

Referring now in particular to FIG. 2B, reference numeral 200B refers to an exemplary DMT-based modem disposed at a DSL Receive station, e.g., CPE's DSL Network Termination (NT) unit. Essentially, the Receiver station modem 200B reverses the processing performed by the transmitting modem 200A described above. The incoming line signal 218 is first filtered by a receive filter 220 and then converted back into a sequence of digital samples by an Analog-to-Digital (A/D) converter 222. A time domain equalizer 224, which is generally implemented as a plurality of equalizer filters corresponding to the DMT carrier channels, compensates for the effect of inter-symbol interference (ISI) due to delay caused by the communication medium. A Serial-to-Parallel (S/P) converter 226 thereafter converts the sequence of digital values filtered through the equalizer 224 into a parallel collection of real number values yᵢ on a per-channel basis. The real number values yᵢ in the time domain are then transformed into complex variables Yᵢ in the frequency domain by an FFT module 228. In theory, complex variables Yᵢ should correspond to the complex variables Xᵢ determined by the DMT encoder of the transmitting modem. However, in practice, a complex variable Yᵢ is shifted away from the value defined in the constellation for that DMT carrier channel because of the effects of noise and attenuation due to distortion caused by the communication medium. Accordingly, a frequency domain equalizer 230 having a plurality of equalizer filters corresponding to the DMT channels is used for compensating for the transfer function of the communication medium to map the complex variables Yᵢ into filtered values Zᵢ on a per-tone basis. A DMT decoder 232 compares the filtered complex variable Zᵢ received for each DMT tone with its decision region defined in the constellation used for that channel in order to decode the symbol associated therewith. After the symbols for the DMT tones have been decoded, they are re-sequenced to match the ordering of the data stream at the Transmit station prior to the loading of the bits into separate DMT tones. Thereafter, the resultant bitstream from the DMT decoder 232 is processed by an FEC decoder 234, if necessary, to account for any transmission errors that may still remain. The destination data stream 236 matching the original source data stream 201 is then processed by the CPE DSL equipment in accordance with the DSL service application.

It is generally understood in the art that the various components of the DMT-based DSL transmission system set forth above can be implemented through hardware, through program executed by a processor, or any combination thereof.

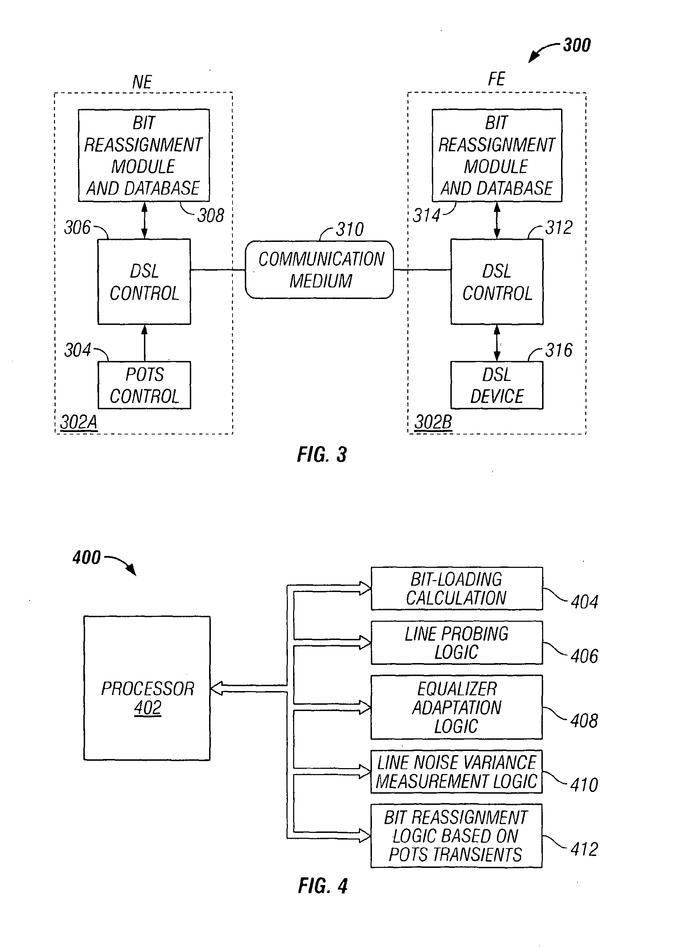

FIG. 3 depicts an exemplary DSL communication system 300 wherein at least one or more DSL data bits may be reallocated in accordance with the teachings of the present invention in order to reduce disruption caused by a probabilistic POTS transient event such as ringing or ring trip. Similar to the description provided above, a CO facility having POTS control block 304 is referred to as a Near End (NE) station 302A that is coupled to a CPE provided as a Far End (FE) station 302B via a suitable medium 310. A DSL control block 306 coupled to the POTS control 304 is operable to effectuate appropriate modulation and associated bit loading scheme(s) for carrying out a DSL service over the communication medium 310. In one implementation, for instance, the DSL control block 306 may include functionality to train the subscriber loop to obtain a target noise margin (e.g., 6 dB) with respect' to the plurality of DSL carrier channels being used, each having a predetermined Signal-to-Noise Ratio (SNR) that allows a certain number of bits to be loaded per channel. For purposes of the present patent application, initial channel bit loading pattern(s) determined for a trained subscriber loop may be referred to as a default bit loading profile database, which can be stored in appropriate storage media accessible to the DSL control logic 306.

Additionally, when certain control signals are provided to the DSL control block 306 by POTS control 304 as will be described in further detail below, a bit reassignment module 308 is operable to be invoked by the DSL control block 306 in order to reassign the bit loading pattern on a channel-by-channel basis. Reassignment logic is designed preferably based on foreknowledge of POTS transient events and their effects on the DSL signals. For instance, a POTS transient event (e.g., ringing or ring trip) can cause distortion in both NE and FE DSL environments, although the transient event generally takes place in a low frequency band. Moreover, since the frequency distribution of the transients is generally stochastic in nature, there is a finite likelihood that there may be some spectral energy in bandwidths that extend up to the DSL frequency spectrum. Accordingly, control logic means (implemented in software, hardware, or a combination) associated with system 300 is operable to monitor the subscriber loop to obtain a profile of the POTS transients, e.g., comprising a stochastic power spectral density (PSD) distribution associated therewith. The PSD profiles of a transient event are then used in determining the spectral effects of the event on each of the DSL carrier channels. In general, it has been determined by way of simulation and experimentation that whereas a portion of the DSL spectrum is more susceptible to the POTS transient energy, the remaining DSL spectrum tends to be less susceptible. In other words, in an exemplary DMT-based DSL transmission system, one or more lower frequency band tones can be particularly prone to distortion caused by the POTS transient (i.e., their SNR values are deteriorated, resulting in increased bit error rate or BER), although the higher frequency band tones remain substantially impervious. Therefore, the bit reassignment logic of the present invention advantageously allocates the DSL data bits from affected carrier channels to more robust channels with a view to reduce the overall error rate of the DSL service, when warranted in a communication system, regardless of whether the bits are transmitted downstream (i.e., from the NE station to FE station) or upstream (i.e., from the FE station to NE station).

It should be recognized by those skilled in the art that the bit reassignment control logic functionality may be implemented in software, hardware, or any combination, and be localized at the CO facility, or distributed between the CO and remote FE stations. Accordingly, in one exemplary implementation, the FE station 302B includes corresponding DSL control 312 associated with one or more DSL devices 316, wherein DSL control 312 is also operable to invoke a bit reassignment module 314 capable of operating in conjunction with the bit reassignment module 308 disposed at the NE station.

Further, the allocation or reallocation of affected DSL bits can be effectuated in a number of methodological implementations. For example, a preset bit reassignment mapping can be provided as a stored look-up table, which includes a relationship between the tones from which a predetermined number of bits to be moved and the tones to which the bits are reallocated. The look-up table may be provided as a stored database in association with the bit reassignment modules 308 and/or 314, that can be activated upon a POTS control signal indicating a POTS transient, e.g., ringing, ring trip, etc. Additionally, bit reassignment may be implemented as a dynamic module which calculates reallocation of DSL data bits when a transient occurs. Where the DSL spectrum has a limited number of tone pairs, e.g., 32 pairs, the bit reallocation calculations may be accommodated within applicable DSL timing constraints. If there is not enough time to bit-swap, however, other alternatives may be provided. By way of example, suppose the bit allocation vector is provided as follows under no-transient conditions (i.e., default profile): N = [b₁, b₂, b₃,...,b₃₂]. Suppose the optimal allocation of bits to achieve a predetermined BER with a static interference is shown by the following vector: I = [bᵢ₁, bᵢ₂, bᵢ₃,...,bᵢ₃₂]. Under these conditions, either the I vector could be stored prior to an event directly in medium associated with the CPE, or the algorithm to develop the I vector from the N vector could be part of the CPE firmware. Also, as a further variation, the algorithm may be downloaded from another site, e.g., the CO facility or a network administration/management node. In any event, a successful bit swap transition can take place virtually instantaneously upon a CO command message. In the event of a non-static interference, for which finer correction may be required, the I vector can be expanded into a time-variant matrix that extends over the entire symbol constellation. It may be that if difference or correction vectors (having only necessary correctional values or "deltas") instead of vectors of absolute bit loading values are provided, certain implementational/computational advantages can be realized.

As an illustration of bit reassignment in a DMT-based DSL environment, suppose that with a 55 dB SNR value, Tone 7 at 28 KHz can carry 13 bits with a noise margin of 7 dB. The target margin of this tone, Tone 7, is supposed to be 6 dB. Further, assume that the SNR on Tone 7 drops to 51 dB during a POTS transient event. If the number of bits to be loaded on Tone 7 is reduced from 13 to 12 bits, then an SNR value of 52 dB will be required, which is not quite sufficient when only 51 dB SNR is available. Additional reduction in the number of bits assigned to Tone 7 (from 12 to 11 bits) will result in a requirement of only 49 dB for the SNR, which is within the SNR capabilities of the affected Tone. The two bits taken from Tone 7 will be reassigned to higher tones that are determined to be fairly impervious to the POTS transient energy spectra.

FIG. 4 depicts a functional block diagram of an exemplary consolidated DSL control module 400 of the present invention, which encompasses the functionality of DSL control and bit reassignment control described above. A processor 402 is disposed in a communication relationship with a storage medium (not explicitly designated) having a variety of stored software modules for effectuating line monitoring, training, bit-loading and reassignment, etc. Processor 402 can be any known microprocessor, custom or otherwise, suitable for an embedded application, including, e.g., digital signal processors (DSPs). The storage medium associated therewith is representative of the overall hierarchy of memory devices containing the program software and data used to implement the functionality of a DSL modem in accordance with the teachings of the present invention, and can include but not limited to the following: read-only memory (ROM), non-volatile random access memory (NV-RAM), static and dynamic RAMs, various programmable ROM types, Flash memory, etc. The functional modules include a bit-loading calculator module 404, a line probing module 406, an equalizer adaptation module 408, a line noise variance measurement module 410 and a bit reassignment module 412. As explained hereinabove, the bit reassignment module 412 is activated upon an indication that POTS transient energy is capable of disrupting the DSL data.

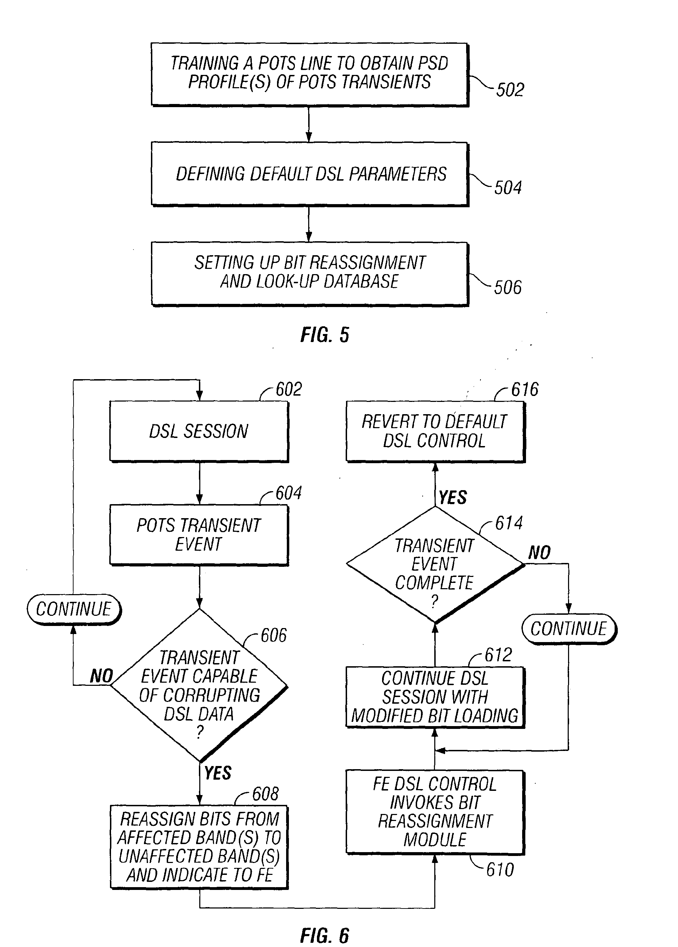

Referring now to FIG. 5, shown there is a flow chart of the present invention's methodology. Upon monitoring a subscriber POTS line and training the same for appropriate noise levels with respect to DSL, PSD profiles associated with transient events are established (block 502). Default DSL parametrics (i.e., bit loading profiles under no-transient conditions, target noise margins, rate adaptive profiles, et cetera) are defined and provided as part of appropriate DSL control module database(s) (block 504). A bit reassignment process and database is set up for effectuating reallocation of DSL data bits when warranted in accordance with any set of criteria optimized to reduce the overall error rate of the DSL service (block 506). As pointed out hereinbefore, the reallocation process may be a static process that involves table look-up or a dynamically executed algorithm executable by one or more processors disposed at either NE or FE stations upon provision of appropriate control signals.

FIG. 6 depicts a flow chart of a particular embodiment of the present invention's method of reducing disruption in a DSL transmission (upstream or downstream) effectuated on a subscriber loop. During a DSL session (block 602), upon occurrence of a POTS transient event (block 604), a determination is made whether the transient is capable of corrupting the DSL data (decision block 606). If not, the DSL session continues normally, using whatever default DSL bit loading profiles set up for the subscriber loop. Otherwise, upon determining that the transient event's PSD profile is disruptive to at least a portion of the DSL spectrum, data bits are reassigned by a transmitting station (e.g., an NE station) to unaffected or substantially less affected band(s). A control message is then forwarded to the receiving station (e.g., an FE station) indicating that the DSL bit loading has been changed in accordance with an applicable reallocation process (block 608). Thereafter, the receiving station's DSL control invokes a reassignment module/database (block 610) so as to continue the DSL session with modified DSL bit loading (block 612). A determination may be made to verify whether the transient event is complete or its effects have subsided sufficiently (decision block 614) and, if so, the DSL control reverts to default profile (block 616).

Based on the foregoing discussion, one skilled in the art should appreciate that the present invention provides an effective system and method for reducing data disruption in a DSL environment caused by any type of POTS transient event, which advantageously overcomes the various deficiencies and shortcomings of the state-of-the-art solutions set forth in Background of the present patent application. The bit reassignment module and associated control logic set forth herein may be implemented in numerous software and hardware configurations and is adaptable to various DSL technologies. Further, the bit reassignment scheme is simple and versatile enough to be implemented without using expensive specialized hardware, regardless of whether POTS splitters are used or not in a particular DSL environment.

Although the invention has been described with reference to certain exemplary circuit arrangements, it is to be understood that the forms of the invention shown and described are to be treated as presently preferred exemplary embodiments only. Various changes, substitutions and modifications can be realized therein without departing from the spirit and scope of the invention as defined by the appended claims.

## Claims

1. A method of reducing disruption in a Digital Subscriber Line (DSL) transmission effectuated on a subscriber loop, comprising:
monitoring said subscriber loop to obtain a profile of a Plain Old Telephone System (POTS) transient event and determining which carrier channels of a DSL transmission spectrum are affected by said POTS transient event; and
when a POTS transient event occurs during a DSL session, allocating DSL data bits to carrier channels of said DSL transmission spectrum based on a criterion optimized to reduce overall error rate of said DSL session.

2. The method of reducing disruption in a DSL transmission effectuated on a subscriber loop as recited in claim 1, wherein said DSL data bits are allocated to said carrier channels in accordance with a predetermined bit-swap mapping procedure set up based on optimizing said criterion.

3. The method of reducing disruption in a DSL transmission effectuated on a subscriber loop as recited in claim 1, wherein said DSL data bits are allocated to said carrier channels in accordance with a dynamically determined bit-swap mapping procedure based on optimizing said criterion.

4. The method of reducing disruption in a DSL transmission effectuated on a subscriber loop as recited in claim 1, further comprising the operation of training said subscriber loop for a predetermined Signal-to-Noise Ratio (SNR).

5. The method of reducing disruption in a DSL transmission effectuated on a subscriber loop as recited in claim 1, further comprising the operation of reverting to a default bitloading carrier channel profile associated with said DSL transmission spectrum upon completion of said POTS transient event.

6. The method of reducing disruption in a DSL transmission effectuated on a subscriber loop as recited in claim 5, wherein said POTS transient event comprises one of a ringing event and a ring trip event.

7. The method of reducing disruption in a DSL transmission effectuated on a subscriber loop as recited in claim 6, wherein said profile of said POTS transient event comprises a stochastic power spectral density (PSD) distribution associated with said transient event.

8. The method of reducing disruption in a DSL transmission effectuated on a subscriber loop as recited in claim 7, wherein said DSL session comprises an Asymmetric DSL (ADSL) session.

9. The method of reducing disruption in a DSL transmission effectuated on a subscriber loop as recited in claim 7, wherein said DSL session comprises a Symmetric DSL (SDSL) session.

10. The method of reducing disruption in a DSL transmission effectuated on a subscriber loop as recited in claim 7, wherein said DSL session comprises a Rate Adaptive DSL (RADSL) session.

11. The method of reducing disruption in a DSL transmission effectuated on a subscriber loop as recited in claim 7, wherein said DSL session comprises a High Bit Rate DSL (HDSL) session.

12. The method of reducing disruption in a DSL transmission effectuated on a subscriber loop as recited in claim 7, wherein said DSL session comprises a Very High Bit Rate DSL (VDSL) session.

13. The method of reducing disruption in a DSL transmission effectuated on a subscriber loop as recited in claim 1, wherein said carrier channels of said DSL transmission spectrum are coded based on a Discrete Multi-Tone (DMT) scheme.

14. The method of reducing disruption in a DSL transmission effectuated on a subscriber loop as recited in claim 1, wherein said carrier channels of said DSL transmission spectrum are coded based on a Carrierless AM/PM (CAP) scheme.

15. The method of reducing disruption in a DSL transmission effectuated on a subscriber loop as recited in claim 1, wherein said carrier channels of said DSL transmission spectrum are coded based on a Discrete Wavelet Multi-Tone (DWMT) scheme.

16. The method of reducing disruption in a DSL transmission effectuated on a subscriber loop as recited in claim 1, wherein said carrier channels of said DSL transmission spectrum are coded based on a Simple Line Code (SLC) scheme.

17. The method of reducing disruption in a DSL transmission effectuated on a subscriber loop as recited in claim 1, wherein said DSL data bits are allocated from carrier channels determined to be susceptible to said POTS transient event to carrier channels determined to be substantially impervious to said POTS transient event.

18. A system for reducing disruption in a Digital Subscriber Line (DSL) transmission effectuated on a subscriber loop, comprising:
means for monitoring said subscriber loop to obtain a profile of a Plain Old Telephone System (POTS) transient event and for determining which carrier channels of a DSL transmission spectrum are affected by said POTS transient event; and
means for allocating DSL data bits to carrier channels of said DSL transmission spectrum based on a criterion optimized to reduce overall error rate of said DSL session, said means for allocating DSL data bits operating responsive to a POTS transient event during a DSL session.

19. The system for reducing disruption in a DSL transmission effectuated on a subscriber loop as recited in claim 18, wherein said means for allocating DSL data bits is operable in accordance with a predetermined bit-swap mapping procedure set up based on optimizing said criterion.

20. The system for reducing disruption in a DSL transmission effectuated on a subscriber loop as recited in claim 18, wherein said means for allocating DSL data bits is operable in accordance with a dynamically determined bit-swap mapping procedure based on optimizing said criterion.

21. The system for reducing disruption in a DSL transmission effectuated on a subscriber loop as recited in claim 18, further comprising means for training said subscriber loop for a predetermined Signal-to-Noise Ratio (SNR).

22. The system for reducing disruption in a DSL transmission effectuated on a subscriber loop as recited in claim 18, further comprising means for reverting to a default bitloading carrier channel profile associated with said DSL transmission spectrum upon completion of said POTS transient event.

23. The system for reducing disruption in a DSL transmission effectuated on a subscriber loop as recited in claim 22, wherein said POTS transient event comprises one of a ringing event and a ring trip event.

24. The system for reducing disruption in a DSL transmission effectuated on a subscriber loop as recited in claim 23, wherein said profile of said POTS transient event comprises a stochastic power spectral density (PSD) distribution associated with said transient event.

25. The system for reducing disruption in a DSL transmission effectuated on a subscriber loop as recited in claim 23, wherein said DSL session comprises an Asymmetric DSL (ADSL) session.

26. The system for reducing disruption in a DSL transmission effectuated on a subscriber loop as recited in claim 23, wherein said DSL session comprises a Symmetric DSL (SDSL) session.

27. The system for reducing disruption in a DSL transmission effectuated on a subscriber loop as recited in claim 23, wherein said DSL session comprises a Rate Adaptive DSL (RADSL) session.

28. The system for reducing disruption in a DSL transmission effectuated on a subscriber loop as recited in claim 23, wherein said DSL session comprises a High Bit Rate DSL (HDSL) session.

29. The system for reducing disruption in a DSL transmission effectuated on a subscriber loop as recited in claim 23, wherein said DSL session comprises a Very High Bit Rate DSL (VDSL) session.

30. The system for reducing disruption in a DSL transmission effectuated on a subscriber loop as recited in claim 18, wherein said carrier channels of said DSL transmission spectrum are coded based on a Discrete Multi-Tone (DMT) scheme.

31. The system for reducing disruption in a DSL transmission effectuated on a subscriber loop as recited in claim 18, wherein said carrier channels of said DSL transmission spectrum are coded based on a Carrierless AM/PM (CAP) scheme.

32. The system for reducing disruption in a DSL transmission effectuated on a subscriber loop as recited in claim 18, wherein said carrier channels of said DSL transmission spectrum are coded based on a Discrete Wavelet Multi-Tone (DWMT) scheme.

33. The system for reducing disruption in a DSL transmission effectuated on a subscriber loop as recited in claim 18, wherein said carrier channels of said DSL transmission spectrum are coded based on a Simple Line Code (SLC) scheme.

34. The system for reducing disruption in a DSL transmission effectuated on a subscriber loop as recited in claim 18, wherein said DSL data bits are allocated from carrier channels determined to be susceptible to said POTS transient event to carrier channels determined to be substantially impervious to said POTS transient event.
